# EUROPEAN PATENT SPECIFICATION

(11) **EP 3 348 907 B1**
(45) Date of publication and mention of the grant of the patent: **17.06.2020**
(21) Application number: 17206500.5
(22) Date of filing: 11.12.2017
(51) Int. Cl.: F23R 3/14, F23R 3/30, F23D 11/38, F23R 3/28, F23D 11/00

(54) **FUEL INJECTOR**
KRAFTSTOFFEINSPRITZER
INJECTEUR DE CARBURANT

(30) Priority: 11.01.2017 GB 201700465
(43) Date of publication of application: 18.07.2018
(73) Proprietor: Rolls-Royce plc, London N1 9FX (GB)
(72) Inventor: Gregory, Jonathan, Derby, Derbyshire DE24 8BJ (GB); Witham, Frederic, Derby, Derbyshire DE24 8BJ (GB); Ballantyne, Steven, Derby, Derbyshire DE24 8BJ (GB); Caruso, Mike, Derby, Derbyshire DE24 8BJ (GB)
(74) Representative: Rolls-Royce plc

(56) References cited:
- EP-A1- 2 604 919
- US-A- 4 070 826
- US-A- 4 693 074
- US-A1- 2016 348 913
- US-B1- 6 543 235

## Description

The present invention concerns fuel injectors used for providing fuel to the combustion chamber of a gas turbine engine. More particularly, the fuel injector is of a jet-in-crossflow type.

The Applicant's co-pending European patent application no. EP16173667 discloses a fuel injector having a jet-in-crossflow arrangement.

In a gas turbine engine, fuel is mixed with air prior to delivery into a combustion chamber where the mixture is ignited. Arrangements for mixing the fuel and air vary. In prefilming arrangements, fuel is formed in a film along a prefilmer surface adjacent to a nozzle. Pressurised, turbulent air streams are directed against the prefilmer surface and serve to shear fuel from the surface and mix the sheared fuel into the turbulent air streams. In vaporiser designs fuel is forced through a small orifice into a more cavernous air filled chamber. The sudden pressure drop and acceleration of the fuel flow upon entering the chamber disperses the fuel into a spray. High temperatures subsequently vaporise the fuel. Turbulent air flows in the chamber again encourage mixing.

Both methods have associated advantages and disadvantages. Prefilming fuel injectors have highly complex and intricate designs that are expensive to manufacture. Design iterations are slow, due to complexity of the manufacturing process. Whilst relatively simple in design and generally cheaper in manufacture, vaporiser fuel injectors provide inferior fuel preparation when compared to prefilming fuel injectors thereby resulting in inferior engine performance.

Jet in crossflow is an air blast technique wherein the energy for atomisation is primarily provided by an airstream encountered by a fuel jet. The fuel is rapidly distributed over a range of radii, giving an opportunity for improved fuel/air mixing; and the mechanical design of the injector is simpler, permitting a reduction in manufacturing cost. A fuel passage is arranged centrally of an annular air swirler. Air flows generally from upstream to downstream in a direction substantially parallel with the fuel passage. The swirler imparts a spin on the air such that it spirals through the air swirler. One or more outlets of the fuel passage are arranged inclined to the flow direction of swirled air passing the outlet. The outlet is configured to deliver the fuel as a jet which crosses the swirled air flow. Walls of the swirler passages in the air swirler may be radially convergent in a manner which directs the exiting air flow towards the fuel passage outlet to encourage mixing of the fuel and air in the outlet chamber and minimise filming of fuel on walls of the air swirler. The radially convergent passages accelerate the airflow providing more kinetic energy to act upon the fuel and improve atomisation. The configuration ensures maximal atomisation of the fuel as it joins the relatively high velocity air stream.

US4070826A and US2016/0348913A disclose jet in cross flow fuel injectors according to the preamble of claim 1.

In accordance with the invention there is provided a fuel injector as set forth in Claim 1.

Embodiments of the fuel injector of the invention include features as described in more detail below.

At least one elongate fuel passage having an elongate axis extending from an upstream inlet end to a downstream outlet end;
one or more outlets at the outlet end, the outlet extending obliquely with respect to the elongate axis;
the elongate fuel passage defined by an inner skin of a double skinned pipe, the double skinned pipe defining a first annular cavity between the inner skin and an outer skin;
the inner skin and the outer skin meeting adjacent the one or more outlets to close an end of the first annular cavity;
a second annular cavity defined by an annular outer wall extending from downstream of the outlet end to a position upstream of the one or more outlets, the annular outer wall being convergent at a downstream end whereby to define an orifice centred nominally coincident with the elongate axis, the second annular cavity having a second annular cavity inlet at an upstream end and wherein the fuel passage outlets emerge at a radially outer surface of the annular outer wall.

The inner and outer skin may meet adjacently upstream of the one or more outlets.

In use, a stream of non-swirling air enters the second annular cavity inlet, passes over the fuel passage and exits at the orifice. The convergent end of the annular outer wall turns the annular air flow into a single jet of air.

Preferably the fuel passage has a plurality of outlets. The outlets are arranged obliquely with respect to the elongate axis and are directed radially outwards and in a downstream direction. The outlets may be inclined in a circumferential and/or axial direction. The plurality of outlets may be arranged in an annular array nominally centred on the elongate axis. The plurality of outlets may be equally spaced from each other. For example, the plurality of outlets may comprise 7 to 9 equally spaced outlets arranged in an annular array.

The annular outer wall may comprise an array of slots arranged to receive an array of fuel passage outlets. For example, the slots may extend in-line with the elongate axis. Alternatively, the annular outer wall may comprise an array of holes through which the outlets may be arranged to protrude. The annular outer wall may form part of an annular air swirler which surrounds the fuel passage.

Multiple fuel passages may be arranged, in use, to provide staged fuel staging within the injector.

A fuel passage incorporates a nose section terminating adjacent the orifice of the annular outer wall. The nose section may extend downstream of the fuel passage outlets. The nose section may be convergent towards the downstream end. Z According to the invention, the nose portion is cone shaped. The end of the nose portion may be arranged slightly upstream of the orifice. The nose portion has ribs arranged circumferentially between the outlets. These ribs may be configured to provide mechanical strength, or to allow manufacture via additive methods such as direct laser deposition.

In use, the fuel injector may be arranged nominally centrally of an annular air swirler to form a fuel spray nozzle. The annular air swirler may optionally be attached to the fuel injector, alternatively the air swirler is supported by a separate component such that it floats around the fuel injector. In such a configuration a spherical section may be incorporated into the outer surface of the injector where it interfaces with the air swirler or seal in order to accommodate axial and angular moevment of the injector relative to the air swirler or seal.

Such a fuel spray nozzle may comprise a component of a gas turbine engine. Optionally the fuel spray nozzle is one of a plurality of fuel injectors in the gas turbine engine. A plurality of fuel spray nozzles may be arranged in an annular array around an engine axis of a gas turbine engine.

Some embodiments of the invention will now be further described with reference to the accoompanying Figures in which;
Figure 1 shows the general arrangement of a fuel spray nozzle within a gas turbine engine as is known in the prior art;
Figure 2 shows in more detail an example of a fuel spray nozzle arrangement known in the prior art;
Figure 3 shows, in section, a fuel injector in accordance with an embodiment of the invention;
Figure 4 shows a more detailed view of the fuel spray nozzle of Figure 3;
Figure 5 shows an end view of a fuel spray nozzle in accordance with an embodiment of the invention;
Figure 6 shows a gas turbine engine into which fuel spray nozzles in accordance with the invention might usefully be used;
Figure 7 shows an example of an air swirler configuration suitable for use in a fuel spray nozzle in accordance with the invention.

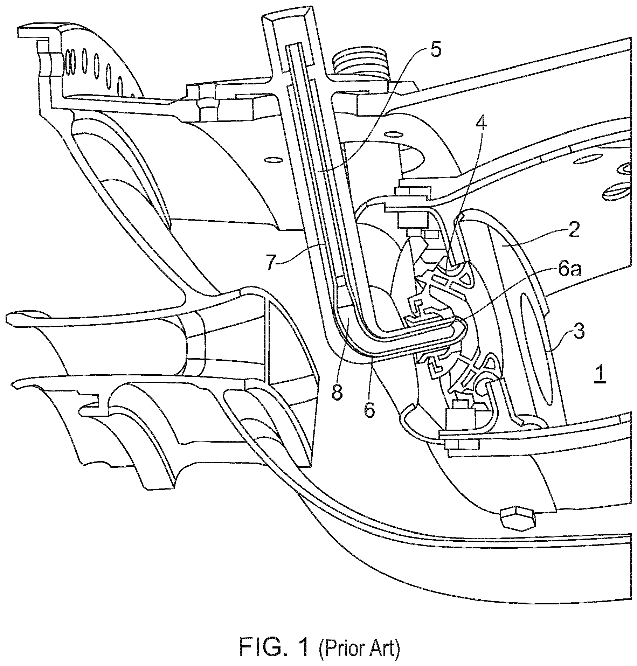

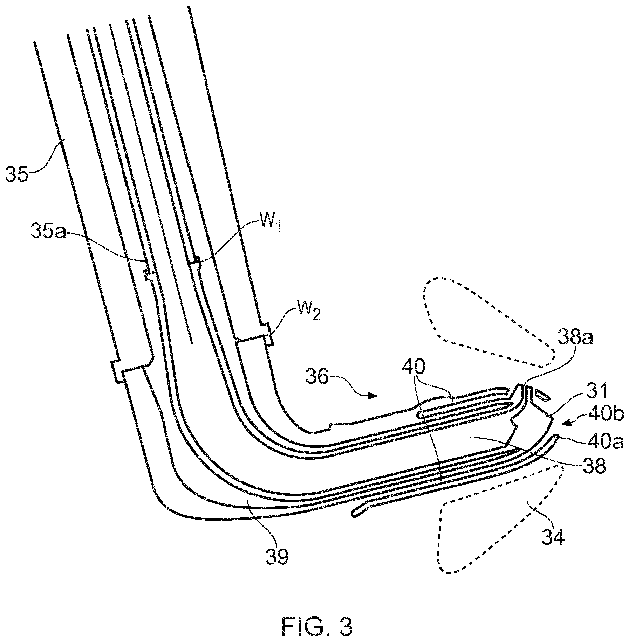

The ribs are not shown in figures 3 to 5. Figure 1 shows the general arrangement of a fuel nozzle within a gas turbine engine.

At an upstream end of a combustor 1 is an annular combustor heatshield 2 in which is provided an annular array of holes 3 through which a mix of fuel and air is delivered to the combustor 1. Mounted to an upstream facing wall of the combustor heatshield 2 is an annular air swirler 4. A fuel feed arm 5 carries a fuel injector 6 which delivers fuel to the centre of an air swirler 4 through an outlet 6a. The feed arm 5 and injector 6 have a double skinned wall which defines an annular cavity 7 around the fuel line 8. This air filled cavity 7 serves as a heatshield for the fuel line 8.

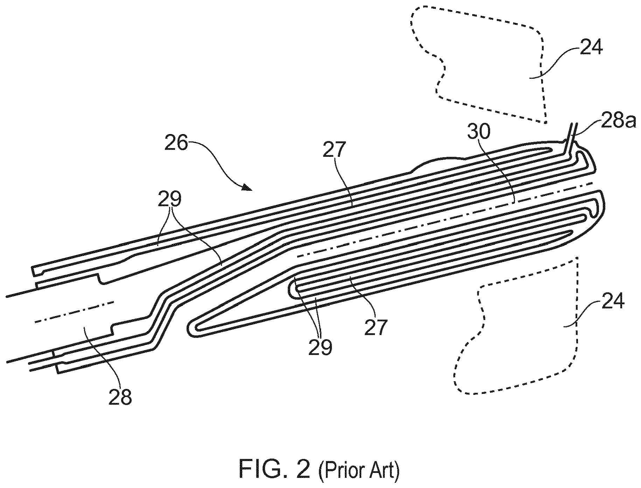

Figure 2 shows in more detail a known arrangement of fuel spray nozzle. The arrangement is an example of a jet-in-crossflow fuel spray nozzle as disclosed in the Applicant's prior filed European Patent application no. EP16173667. A fuel injector 26 has a centrally arranged fuel line 28 which, as it approaches a downstream end of the injector 26, forms an annular fuel passage 27 having an outlet 28a. Typically the outlet 28a is one of a plurality of outlets arranged in an annular array. An annular air filled cavity 29 provides a heatshield on radially inner and radially outer walls of the annular fuel passage 27. A central channel 30 open to the downstream end serves as a conduit for a central jet of air. An annular air swirler 24 (shown in outline only) typically mounted to the combustor (not shown) sits around the injector 26.

Figure 3 shows a fuel injector 36 in accordance with an embodiment of the invention. The fuel injector 36 has a centrally arranged fuel passage 38. At its downstream end, the fuel passage fans out to provide an annular array of outlets 38a. An annular air filled cavity 39 serves as a heatshield for the centrally arranged fuel passage 38. Towards the outlet end of the injector an open ended annular cavity 40 is provided around the annular heatshield cavity 39. An outer wall 40a of the cavity 40 is shaped to turn an airflow passing through the cavity into a single jet leaving an outlet 40b which is arranged centrally of the annular array of outlets 38a. A cone shaped nose 31 of the fuel injector projects towards the outlet 40b to assist in directing air from the open ended annular cavity towards the outlet 40b where it is shaped to form a single jet.

An annular air swirler 34 (shown in outline only) typically mounted to the combustor (not shown) sits around the injector 26. The injector 36 is joined to a double skinned fuel feed tube 35, 35a by welds W₁ and W₂.

In use fuel is delivered through fuel passage 38 and exits through outlets 38a. The outlets 38a are directed so as to project fuel across an air flow path which passes over the outer wall 40a and through air swirler 34. Annular heatshield cavity 39 is closed at the injector outlet end and contains air to insulate the fuel passage 38. In contrast, annular cavity 40 is open at the injector outlet end and a continuous stream of air is channelled through this annular cavity 40 and out through the air outlet 40b which sits just downstream of the cone shaped nose 31. The converging outer wall 40a of cavity 40 and the cone shaped nose 31 together create a single jet of air at the outlet 40b. The outer wall 40a includes an array of holes 40c which encircle protruding fuel outlets 38a. Some air from the annular cavity 40 thus exits through these holes 40c insulating the outlets 38a and providing an air film that may prevent the build-up of fuel in this region reducing the incidence of local coke formation.

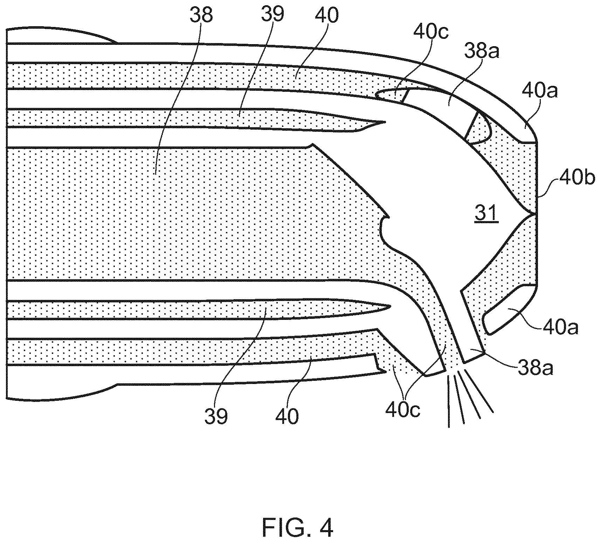

Figure 4 shows a more detailed view of the fuel injector of Figure 3. The same reference numerals are used to identify the same components.

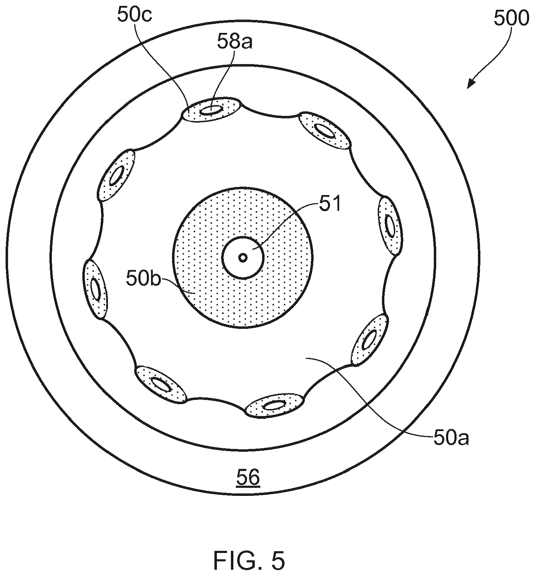

Figure 5 shows an end view of the fuel injector 500 in accordance with an embodiment of the invention. As can be seen, a centrally arranged cone shaped nose 51 is surrounded by a converging outer wall portion 50a which borders an outlet 50b though which an air stream exits. An annular array of fuel injector outlets 58a surrounds the cone shaped nose 51. Each outlet 58a protrudes through a hole in outer wall 50a. Each hole 58a defines an outlet 50c through which a portion of the air from the air stream exits. An annular air swirler 59 surrounds the injector.

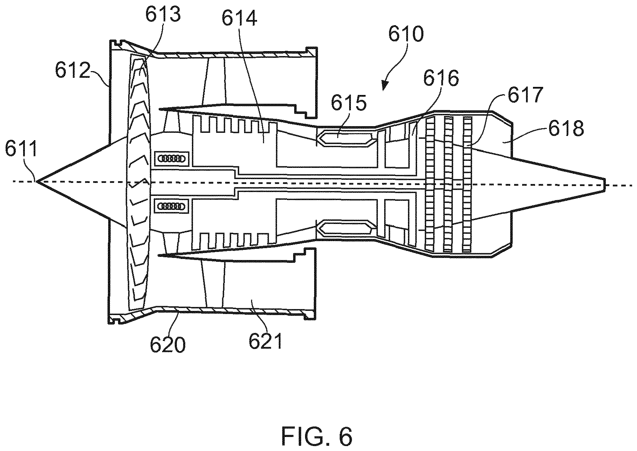

Figure 6 illustrates a gas turbine engine into which fuel injectors in accordance with the invention might usefully be used. With reference to Figure 6, a gas turbine engine is generally indicated at 610, having a principal and rotational axis 611. The engine 610 comprises, in axial flow series, an air intake 612, a propulsive fan 613, a high-pressure compressor 614, combustion equipment 615, a high-pressure turbine 616, a low-pressure turbine 617 and an exhaust nozzle 618. A nacelle 620 generally surrounds the engine 610 and defines the intake 612.

The gas turbine engine 610 works in the conventional manner so that air entering the intake 612 is accelerated by the fan 613 to produce two air flows: a first air flow into the high-pressure compressor 614 and a second air flow which passes through a bypass duct 621 to provide propulsive thrust. The high-pressure compressor 614 compresses the air flow directed into it before delivering that air to the combustion equipment 615.

In the combustion equipment 615 the air flow is mixed with fuel and the mixture combusted. The resultant hot combustion products then expand through, and thereby drive the high and low-pressure turbines 616, 617 before being exhausted through the nozzle 18 to provide additional propulsive thrust. The high 616 and low 617 pressure turbines drive respectively the high pressure compressor 614 and the fan 613, each by suitable interconnecting shaft. An array of fuel injectors in accordance with the invention may conveniently be provided at an inlet end of the combustion equipment 615.

Other gas turbine engines to which the present disclosure may be applied may have alternative configurations. By way of example such engines may have an alternative number of interconnecting shafts (e.g. three) and/or an alternative number of compressors and/or turbines. Further the engine may comprise a gearbox provided in the drive train from a turbine to a compressor and/or fan.

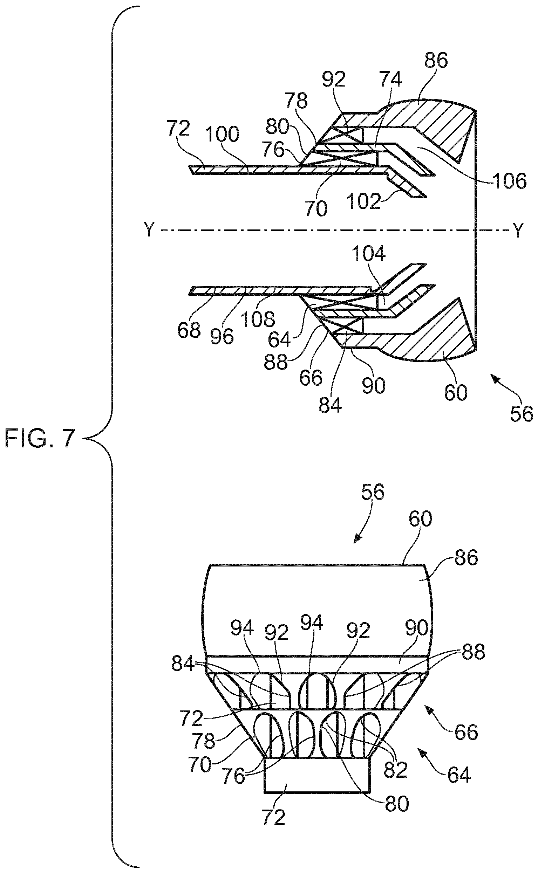

Figure 7 shows an air swirler 56 suitable for use in a fuel spray nozzle in accordance with the invention. The swirler has an axis Y and comprises a first swirler section 64, a second swirler section 66 and an additional swirler section 68. The first swirler section 64 comprises a plurality of vanes 70, a first member 72 and a second member 74. The second member 74 is arranged coaxially around the first member 72 and the vanes 70 extend radially between the first and second members 72 and 74. The vanes 70 have leading edges 76 and the second member 74 has an upstream end 78. The leading edges 76 of the vanes 70 extend with radial and axial components from the first member 72 to the upstream end 78 of the second member 74 and the radially outer ends 80 of the leading edges 76 of the vanes 70 form arches 82 with the upstream end 78 of the second member 74. In particular the leading edges 76 of the vanes 70 extend with axial downstream components from the first member 72 to the upstream end 78 of the second member 74.

The second swirler portion 66 comprises a plurality of vanes 84 and a third member 86. The third member 86 is arranged coaxially around the second member 74. The vanes 84 of the second swirler 66 extend radially between the second and third members 74 and 86. The vanes 84 of the second swirler portion 66 have leading edges 88 and the third member 86 has an upstream end 90. The leading edges 88 of the vanes 84 of the second swirler portion 66 extend with radial and axial components from the upstream end 78 of the second member 74 to the upstream end 90 of the third member 86 and the radially outer ends 92 of the leading edges 88 of the vanes 84 of the second swirler portion 66 form arches 94 with the upstream end 90 of the third member 86. In particular the leading edges 88 of the vanes 84 extend with axial downstream components from the upstream end 78 of the second member 74 to the upstream end 90 of the third member 86.

The first member 72, the second member 74 and the third member 86 are generally annular members with a common axis Y. Thus, the upstream end of the first member 72 is upstream of the upstream end 78 of the second member 74 and the upstream end 78 of the second member 74 is upstream of the upstream end 90 of the third member 86.

The outer surface of the downstream end of the first member 72 tapers/converges towards the axis Y of the fuel injector head 60. The first member 72 The downstream end of the second member 74 tapers/converges towards the axis Y of the fuel injector head 60 and the inner surface of the downstream end of the third member 86 initially tapers/converges towards the axis Y of the fuel injector head 60 and then diverges away from the axis Y of the fuel injector head 60. An annular passage 104 is defined between the first member 72 and the second member 74 and an annular passage 106 is defined between the second member 74 and the third member 86. A central passage 108 is defined within the first member 74 in which a fuel passage can be received in accordance with the invention.

It is seen that the fuel injector head 60 is arranged such that the leading edges 76 and 88 of the vanes 70 and 84 respectively are arranged to extend with axial downstream components from the first member 72 to the upstream end 78 of the second member 74 and from the second member 74 to the upstream end 90 of the third member 86 respectively. In addition it is seen that the fuel injector head 60 is arranged such that the radially outer ends 80 and 92 of the leading edges 76 and 88 of the vanes 70 and 84 respectively form arches 82 and 94 with the upstream ends 78 and 90 of the second and third member 74 and 86 respectively. These features enable the fuel injector head 60 and in particular the first and second swirler sections 64 and 66 of the fuel injector head 60 to be manufactured by direct laser deposition. These features enable the vanes 70 of the first swirler 64 to provide support between the first member 72 and the second member 74 and the vanes 84 of the second swirler 66 to provide support between the second member 74 and the third member 86 during the direct laser deposition process.

The skilled person will appreciate that except where mutually exclusive, a feature described in relation to any one of the above aspects of the invention may be applied mutatis mutandis to any other aspect of the invention.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A fuel injector comprising;
one or more elongate fuel passage (38) having an elongate axis extending from an upstream inlet end to a downstream outlet end;
one or more fuel outlets (38a) at the outlet end extending obliquely with respect to the elongate axis;
the elongate fuel passage defined by an inner skin (35a) of a double skinned pipe, the double skinned pipe defining a first annular cavity (39) between the inner skin (35a) and outer skin (35);
the inner skin (35a) and the outer skin (35) meeting adjacent the one or more outlets (38a) to close an end of the first annular cavity (39);
a second annular cavity (40) defined by an annular outer wall (40a) extending from downstream of the outlet end to a position upstream of the one or more outlets (38a), the annular outer wall (40a) being convergent at a downstream end whereby to define an orifice (40b) centred nominally coincident with the elongate axis, the second annular cavity (40) having a second annular cavity inlet at an upstream end and wherein the fuel passage outlets (38a) emerge at a radially outer surface of the annular outer wall (40a) wherein the fuel passage incorporates a nose section (31) terminating adjacent the orifice (40b) of the annular outer wall (40a), **characterized in that**, the nose section (31) is cone shaped and comprises an array of circumferentially spaced, radially inclined ribs.

2. A fuel injector as claimed in claim 1 wherein the fuel passage has a plurality of outlets (38a).

3. A fuel injector as claimed in claim 2 wherein the outlets (38a) are arranged obliquely with respect to the elongate axis and are directed radially outwards and in a downstream direction.

4. A fuel injector as claimed in claim 2 or claim 3 wherein the outlets (38a) are inclined in a circumferential and/or axial direction.

5. A fuel injector as claimed in any of claims 2 to 4 wherein the plurality of outlets (38a) is arranged in an annular array nominally centred on the elongate axis.

6. A fuel injector as claimed in any preceding claim wherein the annular outer wall (40a) comprise an array of slots arranged to receive an array of fuel passage outlets (38a).

7. A fuel injector as claimed in claim 6 wherein the slots extend in-line with the elongate axis.

8. A fuel injector as claimed in any of claims 1 to 5 wherein the annular outer wall (40a) comprises an array of holes (40c) through which the outlets may be arranged to protrude.

9. A fuel injector as claimed in claim 1 wherein the nose section (31) extends downstream of the fuel passage outlets (38a).

10. A fuel injector as claimed in any preceding claim wherein the nose section (31) is convergent towards the downstream end.

11. A fuel injector as claimed in any preceding claim wherein the end of the nose portion (31) is arranged slightly upstream of the orifice (40b).

12. A fuel injector as claimed in any preceding claim in combination with an air swirler, the fuel injector further including a spherical section on the outer surface of the injector where it interfaces with the air swirler.

13. A fuel injector (36) as claimed in any preceding claim in combination with an air swirler, the fuel injector arranged nominally centrally of an annular air swirler (34) to form a fuel spray nozzle.

14. A gas turbine engine comprising one or more fuel spray nozzles, the fuel spray nozzles having the configuration as claimed in claim 13.

15. A gas tubine engine as claimed in claim 14 comprising a plurality of fuel spray nozzles arranged in an annular array around an engine axis of the gas turbine engine.

## Patentansprüche

1. Kraftstoffeinspritzer, umfassend:
einen oder mehrere längliche Kraftstoffdurchlässe (38) mit einer sich von einem stromaufwärtigen
Einlassende zu einem stromabwärtigen Auslassende erstreckenden länglichen Achse; eine oder mehrere Kraftstoffauslässe (38a) am Auslassende, die sich bezüglich der länglichen Achse schräg erstrecken;
wobei der längliche Kraftstoffdurchlass durch eine Innenhaut (35a) eines doppelhäutigen Rohrs definiert wird, wobei das doppelhäutige Rohr einen ersten ringförmigen Hohlraum (39) zwischen der Innenhaut (35a) und der Außenhaut (35) definiert;
die Innenhaut (35a) und die Außenhaut (35) benachbart an den einen oder die mehreren Auslässe (38a) aufeinandertreffen, um ein Ende des ersten ringförmigen Hohlraums (39) zu schließen;
einen zweiten ringförmigen Hohlraum (40), der durch eine ringförmige Außenwand (40a) definiert ist, die sich stromabwärts des Auslassendes zu einer Position stromaufwärts des einen oder der mehreren Auslässe (38a) erstreckt, wobei die ringförmige Außenwand (40a) an einem stromabwärtigen Ende konvergent ist, wodurch eine nominell mit der länglichen Achse zusammenfallende Öffnung (40b) definiert wird, wobei der zweite ringförmige Hohlraum (40) einen zweiten ringförmigen Hohlraumeinlass an einem stromaufwärtigen Ende aufweist, und wobei die Kraftstoffdurchlassauslässe (38a) an einer radial äußeren Oberfläche der ringförmigen Außenwand (40a) erscheinen, wobei der Kraftstoffdurchlass einen Nasenabschnitt (31) beinhaltet, der benachbart zur Öffnung (40b) der ringförmigen Außenwand (40a) endet, **dadurch gekennzeichnet, dass** der Nasenabschnitt (31) kegelförmig ist und eine Reihe von in Umfangsrichtung beabstandeten radial geneigten Rippen umfasst.

2. Kraftstoffeinspritzer nach Anspruch 1, wobei der Kraftstoffdurchlass eine Vielzahl von Auslässen (38a) aufweist.

3. Kraftstoffeinspritzer nach Anspruch 2, wobei die Auslässe (38a) bezüglich der länglichen Achse schräg angeordnet sind und radial nach außen und in eine stromabwärtige Richtung gerichtet sind.

4. Kraftstoffeinspritzer nach Anspruch 2 oder Anspruch 3, wobei die Auslässe (38a) in einer Umfangs- und/oder Axialrichtung geneigt sind.

5. Kraftstoffeinspritzer nach einem der Ansprüche 2 bis 4, wobei die Vielzahl von Auslässen (38a) in einer nominal auf die längliche Achse zentrierten ringförmigen Reihe angeordnet ist.

6. Kraftstoffeinspritzer nach einem der vorangehenden Ansprüche, wobei die ringförmige Außenwand (40a) eine Reihe von Schlitzen umfasst, die angeordnet sind, um eine Reihe von Kraftstoffdurchlassauslässen (38a) aufzunehmen.

7. Kraftstoffeinspritzer nach Anspruch 6, wobei sich die Schlitze in einer Linie zur länglichen Achse erstrecken.

8. Kraftstoffeinspritzer nach einem der Ansprüche 1 bis 5, wobei die ringförmige Außenwand (40a) eine Reihe von Löchern (40c) umfasst, durch die Auslässe angeordnet sein können vorzuragen.

9. Kraftstoffeinspritzer nach Anspruch 1, wobei sich der Nasenabschnitt (31) stromabwärts der Kraftstoffdurchlassauslässe (38a) erstreckt.

10. Kraftstoffeinspritzer nach einem der vorangehenden Ansprüche, wobei der Nasenabschnitt (31) zum stromabwärtigen Ende konvergent ist.

11. Kraftstoffeinspritzer nach einem der vorangehenden Ansprüche, wobei das Ende des Nasenabschnitts (31) leicht stromaufwärts zur Öffnung (40b) angeordnet ist.

12. Kraftstoffeinspritzer nach einem der vorangehenden Ansprüche in Kombination mit einem Luftverwirbler, wobei der Kraftstoffeinspritzer ferner einen kugelförmigen Abschnitt auf der Außenfläche des Einspritzers umfasst, wo er eine Schnittstelle zum Luftverwirbler bildet.

13. Kraftstoffeinspritzer (36) nach einem der vorangehenden Ansprüche in Kombination mit einem Luftverwirbler, wobei der Kraftstoffeinspritzer nominell zentral zu einem ringförmigen Luftverwirbler (34) angeordnet ist, um eine Kraftstoffsprühdüse zu bilden.

14. Gasturbinenmotor, umfassend eine oder mehrere Kraftstoffsprühdüsen, wobei die Kraftstoffsprühdüsen die Konfiguration nach Anspruch 13 aufweisen.

15. Gasturbinenmotor nach Anspruch 14, umfassend eine Vielzahl von Kraftstoffsprühdüsen, angeordnet in einer ringförmigen Reihe um eine Motorachse des Gasturbinenmotors.

## Revendications

1. Injecteur de carburant comprenant ;
un ou plusieurs passages de carburant allongés (38) possédant un axe allongé s'étendant à partir d'une extrémité d'entrée en amont jusqu'à une extrémité de sortie en aval ;
une ou plusieurs sorties de carburant (38a) au niveau de l'extrémité de sortie s'étendant obliquement par rapport à l'axe allongé ;
le passage de carburant allongé défini par une peau interne (35a) d'un tuyau à double peau, le tuyau à double peau définissant une première cavité annulaire (39) entre la peau interne (35a) et la peau externe (35) ;
la peau interne (35a) et la peau externe (35) se rencontrant adjacente à la ou les sorties (38a) pour fermer une extrémité de la première cavité annulaire (39) ;
une seconde cavité annulaire (40) définie par une paroi externe annulaire (40a) s'étendant à partir de l'aval de l'extrémité de sortie jusqu'à une position en amont de la ou des sorties (38a), la paroi externe annulaire (40a) étant convergente au niveau d'une extrémité en aval ce qui permet de définir un orifice (40b) centré coïncidant nominalement avec l'axe allongé, la seconde cavité annulaire (40) possédant une seconde entrée de cavité annulaire au niveau d'une extrémité en amont et lesdites sorties de passage de carburant (38a) débouchant au niveau d'une surface externe radialement de la paroi externe annulaire (40a), ledit passage de carburant incorporant une section de nez (31) se terminant adjacente à l'orifice (40b) de la paroi externe annulaire (40a), **caractérisée en ce que** la section de nez (31) est en forme de cône et comprend un réseau de nervures radialement inclinées espacées circonférentiellement.

2. Injecteur de carburant selon la revendication 1, ledit passage de carburant possédant une pluralité de sorties (38a).

3. Injecteur de carburant selon la revendication 2, lesdites sorties (38a) étant agencées obliquement par rapport à l'axe allongé et étant dirigées radialement vers l'extérieur et selon une direction en aval.

4. Injecteur de carburant selon la revendication 2 ou la revendication 3, lesdites sorties (38a) étant inclinées selon une direction circonférentielle et/ou axiale.

5. Injecteur de carburant selon l'une quelconque des revendications 2 à 4, ladite pluralité de sorties (38a) étant agencées en un réseau annulaire centré nominalement sur l'axe allongé.

6. Injecteur de carburant selon l'une quelconque des revendications précédentes, ladite paroi externe annulaire (40a) comprenant un réseau de fentes agencées pour recevoir un réseau de sorties de passage de carburant (38a).

7. Injecteur de carburant selon la revendication 6, lesdites fentes s'étendant en ligne avec l'axe allongé.

8. Injecteur de carburant selon l'une quelconque des revendications 1 à 5, ladite paroi externe annulaire (40a) comprenant un réseau de trous (40c) à travers lesquels les sorties peuvent être agencées pour faire saillie.

9. Injecteur de carburant selon la revendication 1, ladite section de nez (31) s'étendant en aval des sorties de passage de carburant (38a).

10. Injecteur de carburant selon l'une quelconque des revendications précédentes, ladite section de nez (31) étant convergente vers l'extrémité en aval.

11. Injecteur de carburant selon l'une quelconque des revendications précédentes, ladite extrémité de la partie de nez (31) étant agencée légèrement en amont de l'orifice (40b).

12. Injecteur de carburant selon l'une quelconque des revendications précédentes en combinaison avec une coupelle de turbulence d'air, l'injecteur de carburant comprenant en outre une section sphérique sur la surface externe de l'injecteur où il s'interface avec la coupelle de turbulence d'air.

13. Injecteur de carburant (36) selon l'une quelconque des revendications précédentes en combinaison avec une coupelle de turbulence d'air, ledit injecteur de carburant étant agencé nominalement au centre d'une coupelle de turbulence d'air annulaire (34) pour former une buse de pulvérisation de carburant.

14. Moteur à turbine à gaz comprenant une ou plusieurs buses de pulvérisation de carburant, les buses de pulvérisation de carburant possédant la configuration selon la revendication 13.

15. Moteur à turbine à gaz selon la revendication 14, comprenant une pluralité de buses de pulvérisation de carburant agencées en un réseau annulaire autour d'un axe de moteur du moteur à turbine à gaz.
